# EUROPEAN PATENT APPLICATION

(11) **EP 4 783 537 A1**
(43) Date of publication of application: **29.07.2026**
(21) Application number: 25221040.6
(22) Date of filing: 05.12.2025
(51) Int. Cl.: H04L 45/02, H04L 65/1073

(54) **WIRELESS COMMUNICATION METHOD AND DEVICE THEREOF**

(30) Priority: 27.01.2025 US 202519038689
(71) Applicant: TP-Link Systems Inc., Irvine, California 92618 (US)
(72) Inventor: DONG, Jiale, Shenzhen, 518000 (CN); LIU, Qianhao, Shenzhen, 518000 (CN)
(74) Representative: Marks & Clerk LLP

(57) **Abstract**

The disclosure provides a first router in a VoIP-capable Mesh network, wherein the first router operates in an agent-mode. The first router includes: a memory; and one or more processors operatively coupled to the memory, the one or more processors configured to: detect a connection of a VoIP-capable endpoint device to the first router through a voice physical interface, wherein the voice physical interface is a module that bridges the VoIP-capable endpoint device and the first router with at least one connection type; obtain device information of the VoIP-capable endpoint device; and based at least part on the device information of the VoIP-capable endpoint device, transmit the registration request to a second router operating in a controller-mode within the VoIP-capable mesh network.

## Description

### CROSS-REFERENCE TO RELATED APPLICATIONS

This Patent application claims priority to U.S. Patent Application No. 19/038,689, filed on January 27, 2025 and entitled "WIRELESS COMMUNICATION METHOD AND DEVICE THEREOF". The entire disclosure of the aforementioned application is incorporated by reference as part of the disclosure of this application.

### TECHNICAL FIELD

The disclosure relates to the technical field of wireless communication, in particular to a first router in a (VoIP-capable) Mesh network, a second router in a (VoIP-capable) Mesh network, (VoIP-capable) Mesh network, a method performed by the first router in a VoIP-capable Mesh network, a method performed by the second router in a (VoIP-capable) Mesh network, an electronic device, and computer-readable storage medium.

### BACKGROUND

With the continual advancement of network communication technology, VoIP (Voice over Internet Protocol) has emerged as one of the mainstream communication methods. VoIP technology enables the transmission of voice and multimedia data over the internet, allowing users to make voice and video calls online. It offers flexibility, convenience, low cost, and a broad range of features, providing users with an efficient, economical, and convenient mode of communication.

However, traditional VoIP systems are constrained by network architecture, which limits large-scale, distributed deployment and management capabilities. Deploying VoIP systems within a Mesh network fails to fully leverage the advantages inherent to Mesh network structures.

Consequently, there is a need to propose enhancements to both Mesh and VoIP technologies.

### SUMMARY

According to an aspect of the present application, a first router in a Mesh network is provide. The first router operates in an agent-mode, the first router comprises: a memory; and one or more processors operatively coupled to the memory, the one or more processors configured to: detecte a connection of a VoIP-capable endpoint device to the first router through a voice physical interface, wherein the voice physical interface is a module that bridges the VoIP-capable endpoint device and the first router with at least one connection type; obtain device information of the VoIP-capable endpoint device, generate a registration request comprising the device information of the VoIP-capable endpoint device; and transmit the registration request to a second router operating in a controller-mode within the Mesh network.

According to another aspect of the present application, a second router in a Mesh network is provided. The second router operates in a controller-mode, the second router comprising: a memory configured to store configuration information for the Mesh network; and one or more processors operatively coupled to the memory, the one or more processors configured to: configure the first router based on the configuration information for the Mesh network.

According to another aspect of the present application, a computer-readable storage medium, which has stored thereon computer programs which, when executed by the processor of the first router, cause the processor to perform: detecting a connection of a VoIP-capable endpoint device to the first router through a voice physical interface; obtaining device information of the VoIP-capable endpoint device through the voice physical interface, generating a registration request comprising the device information of the VoIP-capable endpoint device; and transmitting the registration request to a second router operating in a controller-mode within the Mesh network.

According to another aspect of the present application, a method performed by a first router in a Mesh network is provided, wherein the first router operates in an agent-mode. The method includes: detecting a connection of a VoIP-capable endpoint device to the first router through a voice physical interface; obtaining device information of the VoIP-capable endpoint device through the voice physical interface, generating a registration request comprising the device information of the VoIP-capable endpoint device; and transmitting the registration request to a second router operating in a controller-mode within the Mesh network.

According to another aspect of present application, an electronic device is provided, which comprises: a processor, and a memory having stored there on computer programs which, when executed by the processor, cause the processor to perform the above method.

### BRIEF DESCRIPTION OF THE DRAWINGS

In order to more clearly explain the embodiments of present application or the technical solution in the prior art, the drawings needed to be used in the description of the embodiments of present application or the prior art will be briefly introduced below. Obviously, the drawings in the following description are only some embodiments recorded in present application, and other drawings may be obtained according to these drawings of the embodiments of present application for those skilled in the art.
Fig. 1 illustrates a schematic diagram of an application scenario according to an embodiment of this disclosure.
Fig. 2 illustrates a schematic diagram of a topological structure in view of a Mesh network framework according to an embodiment of this disclosure.
Fig. 3 illustrates a schematic diagram of a topological structure in view of a VoIP network framework according to an embodiment of this disclosure.
Fig. 4 illustrates a schematic diagram of a service architecture of the VoIP-capable Mesh network according to an embodiment of this disclosure.
Fig. 5 illustrates a schematic diagram of a controller router according to an embodiment of the present application.
Fig. 6 illustrates a schematic diagram of a user interface according to an embodiment of the present application.
Fig. 7 illustrates a flow chart of a method performed by the agent router according to an embodiment of the present application.
Fig. 8 illustrates a schematic diagram of an outbound process according to an embodiment of the present application.
Fig. 9 illustrates a schematic diagram of an inbound process according to an embodiment of the present application.
Fig. 10 shows an example configuration of a communication device according to an embodiment of the present disclosure.

### DETAILED DESCRIPTION

In order to provide a clearer and more complete description of the purpose, technical solution, and advantages of the present disclosure, the following description, in conjunction with the accompanying drawings, will provide a clear and comprehensive understanding of the technical solution in the present disclosure. It should be noted that the described embodiments are only a part of the embodiments disclosed herein, and not the entire embodiments. All other embodiments that ordinary skilled persons in the art may obtain without exercising inventive labor based on the embodiments disclosed herein are within the scope of the present disclosure.

The terms "first," "second," "third," "fourth," etc. (if present) used in the specification and claims, as well as in the accompanying drawings, are used to distinguish similar objects and are not necessarily used to describe a specific order or sequence. It should be understood that the use of such data may be interchangeable in appropriate circumstances, so that the embodiments of the present disclosure described herein may be implemented in an order other than that shown or described here.

It should be understood that the numbering of the processes in various embodiments of the present disclosure does not imply a specific order of execution. The execution order of the processes should be determined based on their functionality and inherent logic, and should not impose any limitations on the implementation process of the embodiments of the present disclosure.

It should be understood that the terms "comprising" and "having" and their variations intend to cover non-exclusive inclusion, such as a process, method, system, product, or apparatus that includes a series of steps or units, not necessarily limited to those explicitly listed, but may include other steps or units that are inherently present in these processes, methods, products, or apparatus.

It should be understood that the term "multiple" means two or more. The term "and/or" is merely a description of the associated relationship between related objects, indicating that there may be three possible relationships. For example, "A and/or B" may mean: A exists alone, A and B exist simultaneously, or B exists alone. The character "/" generally indicates an "or" relationship between the preceding and following related objects. "Including A, B, and C," "including A, B, C" means that A, B, and C are all included, and "including A, B, or C" means that one of A, B, and C is included. "Including A, B and/or C" means that any one or two or all three of A, B, and C are included.

It should be understood that "corresponding to B with A," "corresponding to A with B," "A corresponds to B," or "B corresponds to A" means that B is associated with A and may be determined based on A. Determining B based on A does not mean that B can only be determined based on A, but can also be determined based on A and/or other information. The matching of A and B means that the similarity between A and B is greater than or equal to a predetermined threshold.

Depending on the context, the term "if" used herein may be interpreted as "when" or "in response to determining" or "in response to detecting."

The following specific embodiments will provide a detailed description of the technical solution of the present disclosure. These specific embodiments may be combined with each other, and certain concepts or processes may not be reiterated in some embodiments if they are the same or similar. In order to provide a clearer understanding of the purpose, technical solution, and advantages of the present disclosure, the following description will be provided in conjunction with the accompanying drawings.

With the continuous development of network communication technology, VoIP has become one of the primary communication methods. VoIP technology, which transmits voice and multimedia data over the internet, allows users to conduct voice and video calls through internet connections. Offering flexibility, convenience, low costs, and extensive functionality, VoIP provides an efficient, economical, and accessible communication solution. However, traditional VoIP systems are limited by network architecture, posing challenges for large-scale and distributed deployment and management.

Mesh networking technology is designed to enhance network coverage and reliability. Connections in Mesh networks may be established through wired, wireless, or hybrid wired-wireless methods, and are categorized by topology as chain, star, or hybrid configurations. Typically, Mesh networking operates in a primary-secondary arrangement, with the primary router functioning in controller mode and secondary routers in agent mode. Secondary routers in agent mode only manage wired and wireless terminal access.

Some current Mesh devices support VoIP functionality, such as analog phones, DECT, IP Phones, and various applications like voicemail, virtual fax machines, and SIP protocol-based mobile or PC applications. These devices aim to extend VoIP service coverage. However, in a Mesh network setup, no unified management for these voice terminals is available.

In mesh networking architectures, due to the primary-secondary arrangement, only routers operating in controller mode are able to provide VoIP functionality, while routers in agent mode are limited to forwarding SIP signaling and call data without activating voice features. Furthermore, extension devices such as FXS and DECT remain unable to utilize VoIP capabilities. When multiple voice-enabled routing devices form a network, Agent-mode routers are restricted to managing wired and wireless terminal access, significantly limiting their ability to deliver voice services. As a result, only controller-mode routers may fully leverage voice features in practical applications, thereby constraining the usability of voice functionality and leading to the underutilization of voice resources in agent-mode routers. Additionally, the requirement for individual IP phone configuration, as the primary SIP protocol entity, further complicates network management.

Thus, the current Mesh networking technology exhibits several shortcomings in supporting VoIP as follows.

Firstly, device compatibility remains as an issue. When devices operate in agent mode, existing technical solutions lack comprehensive support for various types of VoIP-capable endpoint device, such as devices with DECT and FXS ports, which limits the application range of voice functionality within a Mesh network. In other words, some VoIP-capable endpoint devices may lack support for mesh networks or may be incompatible with agent routers. Consequently, many users cannot fully exploit the advantages of Mesh networks for voice communication, leading to underutilized voice resources in agent devices.

Secondly, the complexity of management and configuration further restricts the broad adoption of voice communication in Mesh networks. Due to the self-organizing and dynamic nature of Mesh networks, their management and configuration processes are relatively complex. For non-professional users, configuring and managing both the Mesh network and various voice devices may be challenging, increasing the difficulty and cost of using Mesh networks for voice communication.

Thirdly, communication quality and stability pose challenges for voice communication in current Mesh networks. As the number of voice devices in the network grows, ensuring the functionality and stability of each device's voice communication becomes an issue. Signal interference, packet loss, and other issues may affect communication quality and stability in current Mesh-based voice networks.

Accordingly, the present disclosure proposes improvements to existing Mesh networking technology to better support voice communication, particularly VoIP-based voice communication, in Mesh environments. Specifically, it provides a Mesh networks, aiming for comprehensive VoIP coverage and efficient management across Mesh networks. This type of Mesh network is called as "VoIP-capable Mesh network" hereinafter. In the VoIP-capable Mesh network, voice data routing and communication paths are dynamically managed across multiple interconnected nodes, enabling resilient and autonomous operation. The term "distributed" emphasizes that control and execution of voice data transmission are spread across the network nodes, ensuring fault tolerance and adaptability without reliance on a central entity. A central entity, such as a controlle router, may act as a coordinator or optimizer, facilitating efficient operation while delegating execution and decision-making to the distributed nodes.

The embodiment of this disclosure enables all voice devices within a Mesh network environment to be managed and utilized by users in a unified manner. Here, "voice devices" refer to those supporting VoIP technology, such as VoIP-capable routers or VoIP-capable end-point devices.

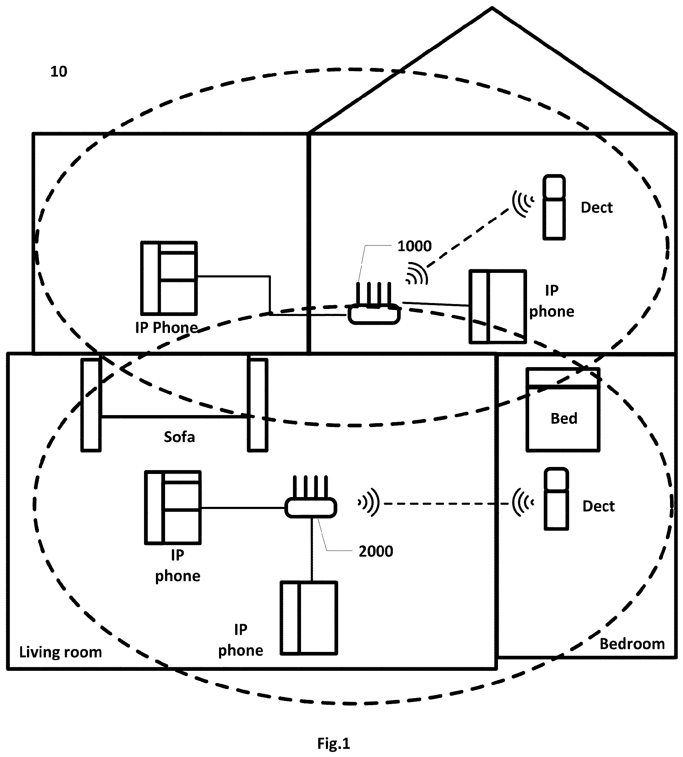

An application scenario 10 according to an embodiment of this disclosure will be described with reference to Fig.1.

As shown in Fig. 1, in a home network environment, when a single router cannot extend wireless coverage across the entire residence, additional routers operating in agent mode are required to expand network coverage. Hereinafter, the router functioning in controller mode will be referred to as the second router 2000 or controller router 2000, while the router operating in agent mode will be referred as the first router 1000 or agent router 1000.

In the Mesh network (which is alos the VoIP-capable Mesh network), the controller router 2000 functions as the control center for the entire network. While agent router 1000 acts as network access points, providing wireless interfaces that allow other devices, such as smartphones and laptops, to connect. Unlike the agent router 1000, the controller router 2000 may directly connect to the internet, enabling it to act as the primary gateway for the network. The agent router 1000 relies on the controller router 2000 for internet access, serving as an extension to expand coverage and enhance connectivity. This setup ensures comprehensive coverage and seamless connectivity throughout the home network.

The number of VoIP-capable endpoint devices in modern households has increased significantly, encompassing analog phones, DECT phones, IP phones, and various applications such as voicemail, virtual fax machines, and SIP protocol-based mobile or PC applications. To manage these diverse voice terminals effectively, This disclosure introduces a distributed voice management system in a Voice over Internet Protocol (VoIP) mesh network. Within the coverage area of the VoIP-capable mesh network, voice devices may be seamlessly accessed and operated. The controller router 2000 functions as the network's control center, while agent routers 1000 serve as access points for diverse voice equipment, enabling uninterrupted and efficient voice communication.

Through the distributed architecture of the VoIP-capable Mesh network, the embodiment of this disclosure enables flexible deployment and efficient management of VoIP services across a broad area. The agent routers 1000 offer multiple voice physical interfaces, supporting a variety of connection types, which significantly enhances the compatibility and scalability of the VoIP-capable Mesh network. For example, the voice physical interface is a versatile module that bridges the VoIP-capable endpoint device and and agent routers 1000 by supporting multiple connection types, enabling seamless communication and broad device compatibility. Furthermore, the unified configuration and management functions provided by the controller router 2000 simplify operational processes, reduce maintenance costs, and improve the overall efficiency and user experience of the VoIP-capable Mesh network, meeting the diverse voice communication needs of modern households.

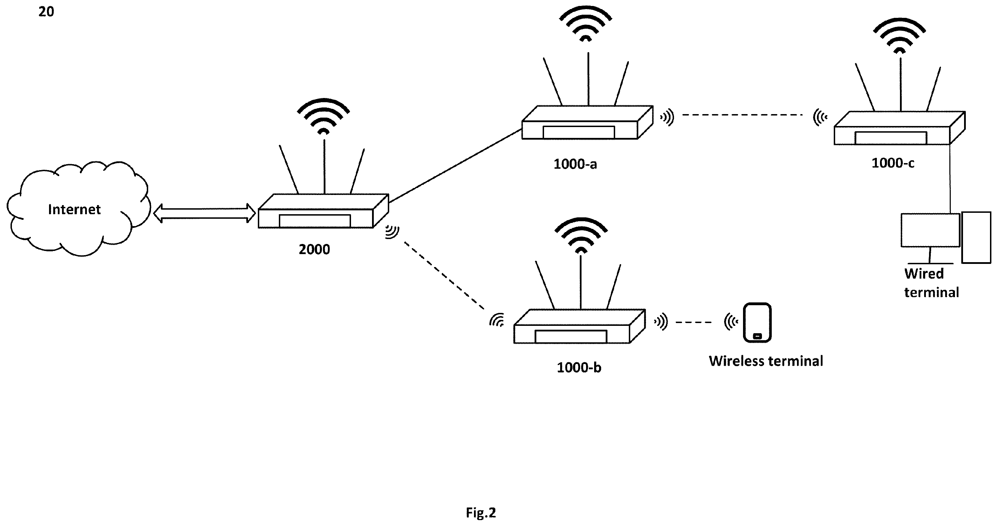

Next, the topological structure 20 in view of a Mesh network framework according to an embodiment of this disclosure is described in reference to Fig.2.

The VoIP-capable Mesh network depicted in Fig. 2 shows a primary-secondary architecture, where the primary router operates in controller mode, while secondary routers function in agent mode. The primary router is also called as controller router 2000 or second router 2000. The secondary router is also called as agent router 1000 or first router 1000, which is marked with 1000-a, 1000-b, 1000-c respectively.

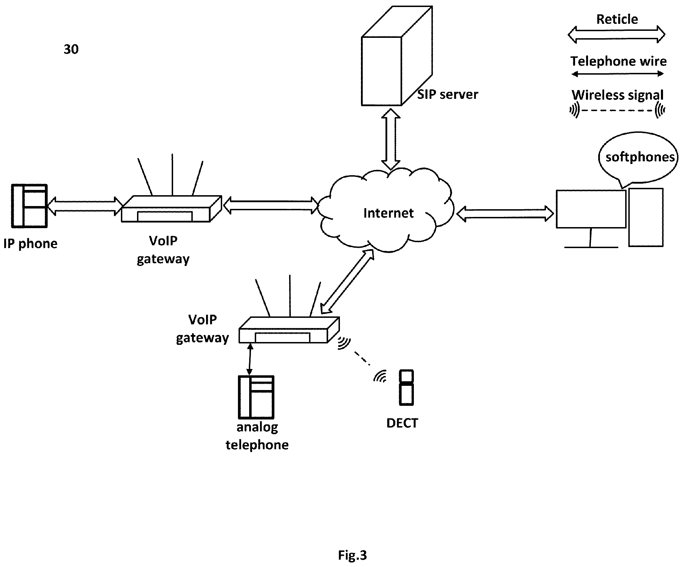

In this embodiment, whether operating in controller or agent mode, both types of routers may serve as VoIP gateways as described in Fig.3, delivering high-quality voice communication services to users.

As depicted in Fig. 2, the controller router 2000 functions as the core of the entire VoIP-capable Mesh network, establishing a stable connection to external networks while also managing the internal network. The VoIP-capable Mesh networking technology, with its unique wireless communication topology, interconnects each node to form a complex and interwoven structure. Within this arrangement, every node serves both as a data transmission endpoint and a relay station, expanding the network's coverage and enhancing its reliability.

This characteristic of VoIP-capable Mesh networking provides a distributed network system with an efficient, adaptable communication and coordination mechanism. In these VoIP-capable Mesh networks, nodes frequently exchange data, share resources, or collaborate on tasks. The multi-hop transmission and distributed routing capabilities of a VoIP-capable Mesh network ensure stable and efficient data transfer between nodes, effectively mitigating single-point failures and congestion issues. Consequently, this allows distributed VoIP-capable Mesh networks to optimize network resources, resulting in substantial improvements in overall performance and reliability.

Notably, although the VoIP-capable Mesh network shown in Fig. 2 employs a hybrid wired and wireless setup, the connectivity methods for VoIP-capable Mesh network according to the embodiment are not limited to this approach. The VoIP-capable Mesh network may also be configured using solely wired or wireless connections. Additionally, based on the topology, VoIP-capable Mesh networks may be further categorized into chain, star, and hybrid structures.

Next, a topological structure in view of a VoIP network framework according to the embodiment of this disclosure is described in reference to Fig. 3.

As shown in Fig. 3, a typical VoIP network framework includes several basic components. These elements work in conjunction to enable seamless voice communication across diverse devices and locations, integrating multiple protocols and technologies to form a cohesive VoIP-capable Mesh network.

The Internet serves as a global wide area network (WAN), comprising interconnected computer networks spanning worldwide. This open network supports communication between VoIP-capable Mesh networks globally, providing an essential backbone for data exchange across varied endpoints.

Terminal devices in a VoIP network (i.e.VoIP-capable endpoint devices) include analog telephones, softphones (such as XLite, Eyebeam, and MicroSIP), DECT (Digital Enhanced Cordless Telecommunications) handsets, and IP phones. These devices generate and receive voice signals, connecting to the Internet via a local area network (LAN) and supporting real-time voice communication over the network.

SIP (Session Initiation Protocol) is a text-based application layer control protocol widely used in VoIP signaling to create, modify, and terminate sessions involving multiple participants. It supports various media types, including voice, video, and instant messaging, offering flexibility, ease of implementation, and scalability within VoIP frameworks.

The SIP server manages SIP requests and responses, handling user authentication, addressing, call establishment, call control, and media negotiation. This server acts as the communication hub, coordinating and managing VoIP network terminal devices to ensure smooth call transmission and uninterrupted service.

Routers in the VoIP network are responsible for converting voice and digital signals and forwarding voice data between the Internet and voice terminals. Typically, routers also serve as VoIP gateways, bridging different network segments and facilitating reliable data flow between devices.

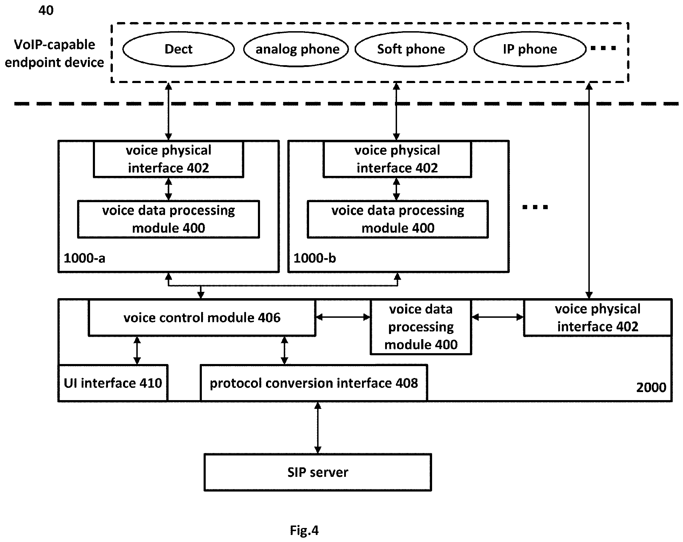

Next, the service architecture 40 of VoIP-capable Mesh network according to the embodiment of this disclosure is described in referenced to Fig. 4.

The VoIP-capable Mesh network, composed of a controller router 2000 and agent router 1000, provides access interfaces for VoIP-capable endpoint devices like analog phones, DECT phones, and IP phones. Using standard protocols (such as SIP), this network supports VoIP services for users.

For example, the primary router (controller router 2000) according to the embodiment of this disclosure automatically switches to controller mode to manage and coordinate the entire network. Equipped with a voice control module 406, voice physical interface 402, and voice data processing module 400, the primary router is responsible for overseeing all voice VoIP-capable endpoint devices. Acting as the central management and control hub, it monitors device statuses and responds to both external and internal voice events, ensuring stable operation and efficient communication throughout the network.

For example, the voice control module 406, which includes voice function controls and management programs, unifies the management and dispatch of all connected voice VoIP-capable endpoint devices. The voice control module 406 tracks and monitors device status, performance, and usage in real time, ensuring that each device operates in sync with the others. As the core unit for voice service processing, The voice control module 406 handles user requests such as making calls or accessing voicemail, allocating resources to process, transcode, and transmit voice signals as required.

For example, the voice physical interface 402 is versatile and may adapt to various physical connection points, such as FXS ports, DECT chips, and network ports. It serves as the physical access point for voice devices, connecting them to the voice data processing module 400. The voice physical interface 402 converts and transmits data between voice and digital signals, ensuring seamless communication. Moreover, the voice physical interface 402 provides power to terminals via FXS ports, enabling effortless integration of diverse voice devices. This allows users to access a range of communication options, tailored to their specific needs and preferences.

For example, the voice data processing module 400 is responsible for formatting voice data collected from various physical interfaces according to an internal voice protocol. This formatting ensures data consistency and readability, after which the data is uploaded to the voice control center for further processing, analysis, or control. Additionally, the voice data processing module 400 receives commands from the control center, which are initially in a unified format but may be adapted for different interface types. The voice data processing module 400 converts these commands to the appropriate data format for each physical interface, ensuring correct parsing and smooth transmission. Once data conversion is complete, the voice data processing module 400 forwards the processed data to the relevant physical interface, achieving seamless connectivity between voice data and diverse devices.

Furthermore, the primary router (the controlle router 2000) according to the embodiment of this disclosure may also include a protocol conversion interface 408 (an interface program supporting the SIP protocol stack) and a UI interface 410 (such as a web page or app).

For example, the protocol conversion interface 408 is responsible for the conversion and transmission between the standard protocol (e.g. SIP protocol) and the internal voice protocol. The internal voice protocol is used to define the signaling protocol that the controller router 2000 and agent routers 1000-a and 1000-b as well as VoIP-capable endpoint devices may adhere to for communication between them.

For example, the internal voice protocol defines the message types, command types, and other essential parameters in detail. Message types include voice data messages, voice control commands, and status report messages, each with a unique identifier to ensure accurate recognition and handling by the controller router 2000, agent routers 1000-a and 1000-b, or VoIP-capable endpoint devices. Command types cover specific instructions issued by the controller router 2000, such as initiating a ringtone or establishing an RTP stream, as well as events reported by VoIP-capable endpoint devices, such as off-hook/on-hook actions and key presses. Additionally, the internal voice protocol specifies other important parameters, such as terminal serial numbers and incoming/outgoing call numbers, to provide comprehensive communication details.

Communication between the controller router 2000 and agent routers (1000-a, 1000-b) primarily comprises two message categories: MSG_FROM_ENDPT and MSG_TO_ENDPT. MSG_FROM_ENDPT refers to messages received by the controller router 2000 from the terminal, including events such as off-hook, on-hook, hook flash, and key presses. Conversely, MSG_TO_ENDPT denotes messages sent by the controller router 2000 to the VoIP-capable endpoint devices, such as tone playback, start/stop ringtone, and RTP stream establishment. Together, these message types form an efficient and reliable communication mechanism between the controller router 2000 and agent routers (1000-a, 1000-b).

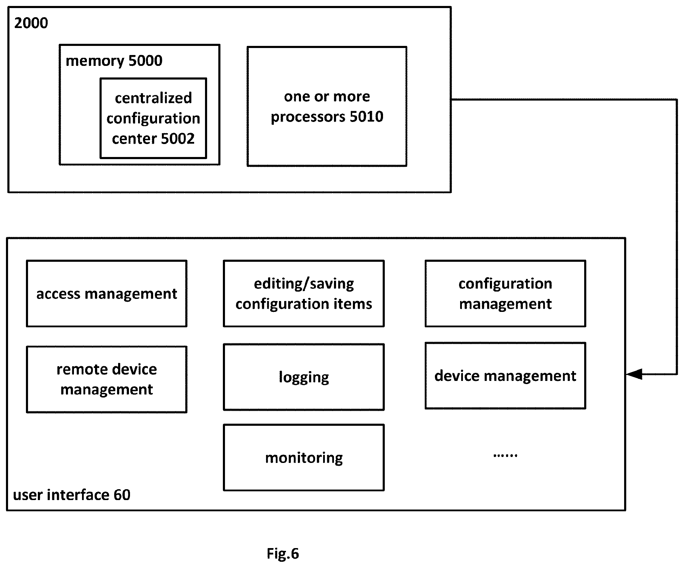

For example, the UI interface 410 (e.g., web page, app) enables users to configure the parameters of the voice VoIP-capable endpoint devices, including the phone name, phone number, and other relevant settings, in addition to displaying the status information of the VoIP-capable endpoint devices. UI interface 410 facilitates effective management of operations related to VoIP-capable endpoint devices. An example of the UI interface 410 will be described with reference to Fig.6, with further details omitted in this disclosure.

For example, the secondary router (the agent router 1000) according to the embodiment of this disclosure may automatically switch to an agent mode, responsible for the access and data processing of specific voice devices. The secondary router serves as an interface for access of voice VoIP-capable endpoint device, providing a convenient VoIP-capable Mesh network interface for various voice devices. It is responsible for establishing and maintaining a stable communication link between the devices and the controller router 2000(the primary router), ensuring real-time data transmission and interaction, and also has flexible device adaptation capabilities to accommodate different voice devices.

As shown in Fig. 4, the secondary router (the agent router 1000) may also include the voice physical interface 402 and voice data processing module 400 described above. As a result, both the controller and the agent may directly connect with the terminal devices through wired or wireless connections, serving as the first point of contact for VoIP calls initiated or received by the terminal devices.

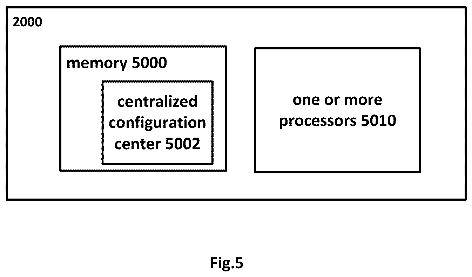

The process for configuring the agent router 1000 by the controller router 2000 is described below, with reference to Fig. 5.

For example, the controller router 2000 (the second router 2000) operates in a controller-mode. The second router 2000 includes a memory 5000 configured to store configuration information for the VoIP-capable Mesh network; and one or more processors operatively coupled to the memory, the one or more processors 5010 configured to configure the first router 1000 based on the configuration information for the VoIP-capable Mesh network.

For example, a centralized configuration center 5002 may be established and stored within the memory of controller router 2000, where configuration information for all devices, agent routers 1000, the controller router 2000, and the SIP server is stored. This configuration center may be one of a database, a collection of configuration files, or a cloud-based configuration management service.

For example, the controller router 2000 may be configured to: in response to detecting a change in the configuration information for the VoIP-capable Mesh network, determine a degree of the change in the configuration information; in response to the degree of the change in the configuration information for the VoIP-capable Mesh network being less than or equal to a predetermined threshold, synchronize with the first router an update of a configuration item that has changed; in response to the degree of the change in the configuration information for the VoIP-capable Mesh network exceeding the predetermined threshold, synchronize all configuration items with the first router.

For example, when any configuration information within the configuration center changes- such as the addition of new devices, modification of device parameters, or updates to the SIP server address - these changes are synchronized across all relevant components in real-time by the controller router 2000. This real-time synchronization may be implemented using WebSocket, MQTT, or other real-time communication technologies, or alternatively through a periodic polling of the configuration center. The present disclosure is not limited thereto.

Depending on the degree of changes, configuration synchronization is performed as either incremental or full updates. Incremental updates synchronize only the modified configuration items, while full updates resynchronize all configuration items. The controller router 2000 may selects the most appropriate synchronization method based on the situation. The present disclosure is not limited thereto.

For example, the controller router 2000 may be configured to track a history of changes to configuration items within the configuration information for the VoIP-capable Mesh network; and in response to detecting a conflict during the modification of a configuration item, revert the configuration item to a previous historical version. The present disclosure is not limited thereto.

That is to say, version control is supported within the controller router 2000, enabling tracking of configuration changes and rollback to previous versions. Conflict detection and resolution mechanisms are also supported within the controller router 2000 to ensure consistency and accuracy when multiple devices or administrators attempt to modify the same configuration item simultaneously. The present disclosure is not limited thereto.

Next, a user interface 60 according to the embodiment of this disclosure is described in reference to Fig. 6.

The embodiment of this disclosure provides an integrated, user-friendly interface, which may take the form of a web interface, desktop application, or mobile application. The user interface according to the embodiment of this disclosure is designed to deliver a comprehensive suite of functionalities for configuring and managing VOIP services within a VoIP-capable Mesh network, including device management, logging, troubleshooting, and fault resolution.

To present the user interface according to this embodiment, the controller router 2000 described in Fig. 5 transmits information for various functions to a display, which then renders the user interface 60. The display may be integrated with the controller router 2000 or configured as a separate unit. And the information for various functions to the display may be generated by the UI interface 410 described above. This disclosure is not limited thereto.

For example, the one or more processors 5010 of the controller router may be further configured to: transmit, to a display for rendering a user interface, information related to a function of at least one of device management, and/or configuration management. Also, the one or more processors 5010 of the controller router may be further configured to: receive information related to a function of editing and saving of configuration items for the VoIP-capable Mesh network; update the configuration items of the VoIP-capable Mesh network in memory. This disclosure is not limited thereto.

By using a function of device management, users may add, delete, configure, and monitor various devices within the VoIP-capable Mesh network, including key components such as voice terminals, agents, and controllers. The user interface 60 according to the embodiment of this disclosure enables users to view real-time device status information, such as online/offline and busy/idle states, and make configuration adjustments as needed.

By using a function of configuration management, users may edit and save configuration data directly within the interface. This data is instantly synchronized with the configuration center 5002 of the controller router 2000 and propagated to all relevant components via an efficient real-time synchronization mechanism, ensuring configuration consistency. Additionally, users may view a history of configuration changes and revert to previous versions if necessary to address configuration errors.

For example, the one or more processors 5010 of the controller router 2000 may be further configured to: transmit information related to a function of logging an operational status of the VoIP-capable Mesh network to a display for rendering a user interface, wherein logging the operational status of the VoIP-capable Mesh network comprises logging at least one of: device status changes, call records, or error messages. This disclosure is not limited thereto.

For example, to enhance VoIP-capable Mesh network monitorability and maintainability, the user interface 60 according to the embodiment of this disclosure offers detailed logging and monitoring capabilities. The logging function records a range of data, including device status changes, call records, and error messages, helping users track VoIP-capable Mesh network performance and identify potential issues. Monitoring allows users to observe key metrics and detect anomalous events in real-time, ensuring stable VoIP-capable Mesh network operation. Through the interface, users may view, filter, search, and export logs and monitoring data for further analysis and troubleshooting.

For example, the one or more processors 5010 of the controller router 2000 may be further configured to: transmit information related to a function of access management to a display for rendering a user interface, wherein the function of access management includes assigning different permission levels to different users or user groups. This disclosure is not limited thereto.

Thus, the user interface 60 according to the embodiment of this disclosure may also support flexible permission management, allowing administrators to assign varying permission levels to different users or groups. This feature is for ensuring VoIP-capable Mesh network security and stability by preventing unauthorized access and modification.

For example, the one or more processors 5010 of the controller router 2000 may be further configured to: transmit information related to a function of remote device management to a display for rendering a user interface, wherein the function of remote device management includes at least one of: restarting devices, updating firmware, and performing diagnostic tests. This disclosure is not limited thereto.

Thus, the user interface 60 according to the embodiment of this disclosure may also provide interface for remote management and control functions, enabling users to manage and control devices remotely. This includes, but is not limited to, actions such as rebooting devices, updating firmware, and conducting diagnostic tests, enhancing VoIP-capable Mesh network usability and maintainability.

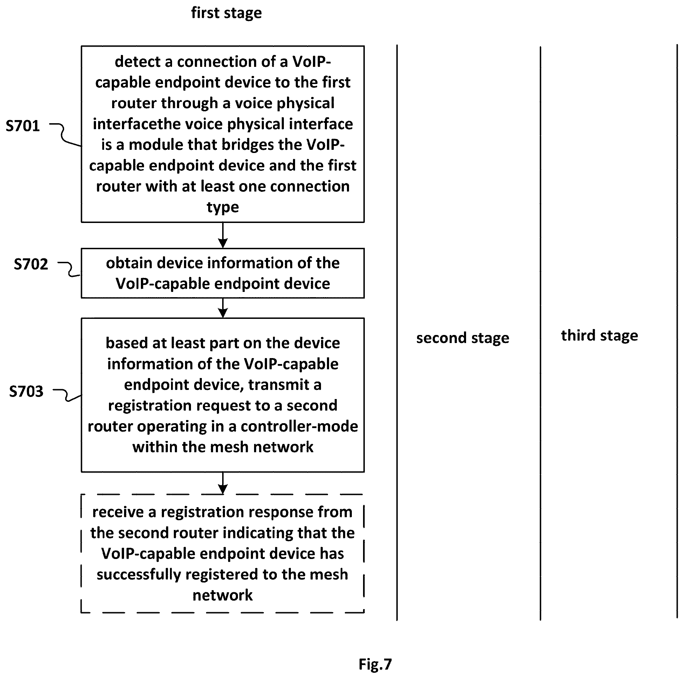

The process that a VoIP-capable endpoint device, via the agent router 1000 according to the embodiment of this disclosure joins the VoIP-capable Mesh network is described with reference to Fig. 7.

In the embodiment of this disclosure, the agent router 1000 serves as an intermediary between the VoIP-capable endpoint device and the controller router 2000, responsible for handling the transmission and conversion of voice data. When a VoIP-capable endpoint device is added to the VoIP-capable Mesh network, the agent router 1000 may perform several steps to ensure the VoIP-capable endpoint device is properly connected and integrated into the communication process. Those steps may be divided into three stages, with each stage responsible for a different function.

Thus, the first stage involves device discovery and registration, which includes device connection, identification, and registration request.

At the first stage, the agent router 1000 may perform steps S701 to S703.

At step 701, the agent router 1000 detects a connection of a VoIP-capable endpoint device to the first router through a voice physical interface, wherein the voice physical interface is a module that bridges the VoIP-capable endpoint device and the first router with at least one connection type. The voice physical interface enhances compatibility by supporting various connection types, ensuring seamless communication and easy integration of diverse voice devices. Step 701 is also called as connection process. During the connection process, when a VoIP-capable endpoint device (such as an analog phone, DECT phone, IP phone, or voice app) connects to the agent router 1000 through a voice physical interface (such as a FXS/FXO port as one of the connection types, a DECT port as one of the connection types) or a software interface (such as a port for VoIP client as one of the connection types), the agent router 1000 detects the new device connection.

At step 702, the agent router 1000 obtains device information of the VoIP-capable endpoint device. For example, the device information of the VoIP-capable endpoint device comprises at least one of: a device identifier, a device type, a device model, a device capability, interface connection information, a MAC address, an IP address, or a firmware version. Step 702 is also called as identification process. In the identification process, the agent router 1000 identifies the device by its model, serial number, or other unique identifiers and retrieves basic hardware and software configuration information.

At step 703, , the agent router 1000 transmits the registration request to a second router operating in a controller-mode within the VoIP-capable mesh network, based at least part on the device information of the VoIP-capable endpoint device. For example, the agent router 1000 may generate a registration request comprising the device information of the VoIP-capable endpoint device, and then transmit the registration request to a second router operating in a controller-mode.

In the registration request, the agent router 1000 sends a registration request to the controller router 2000, which includes detailed information about the newly connected device (such as device type, MAC address, IP address, firmware version, etc.). This disclosure is not limited thereto.

Upon receiving the request, the controller router 2000 validates the device information and assigns it a unique device ID and necessary network parameters. If the validation is successful, the agent router 1000 may receive a registration response from the second router indicating that the VoIP-capable endpoint device has successfully registered to the VoIP-capable Mesh network. This disclosure is not limited thereto.

Once the device is successfully registered, the agent router proceeds to a second stage for configuration synchronization and activation. This disclosure is not limited thereto.

In scenarios where certain VoIP-capable endpoint devices are incompatible with the Mesh network or cannot be directly managed by an agent, the voice physical interface may be employed to connect these devices to an agent. Through the voice physical interface, the agent router 1000 facilitates the registration of these devices with the controller, integrating them into the network effectively. The present disclosure ensures that even certain VoIP-capable endpoint devices lacking inherent Mesh network support may participate in the VoIP-capable Mesh network.

Moreover, for certain VoIP-capable endpoint devices that the agent router 1000 alone cannot fully manage or configure during communication, the controller router 2000 plays a role in providing additional support. In such cases, agent router 1000 acts as an intermediary, bridging the devices with the controller router 2000 to enable seamless operation within the Mesh network. Thus, the is present disclosure enhances the inclusivity and adaptability of the VoIP-capable Mesh network.

After the device is registered, the controller router 2000 sends the device configuration information to the agent router 1000. This may include dial plans, call permissions, and codec settings. In the application step, the agent router 1000 receive configuration information of the VoIP-capable endpoint device from the second router; and configure the VoIP-capable endpoint device based on the configuration information received. Thus, the agent router 1000 may apply the configuration to the newly connected VoIP-capable endpoint device, which may involve updating firmware, setting dial key mappings, adjusting volume, etc. This disclosure is not limited thereto.

Once the configuration is applied, the agent router 1000 performs operational testing of the VoIP-capable endpoint device, wherein the operational testing comprises testing voice quality and/or testing call control functionality; and in response to determining that a result of the operational testing meets predetermined criterion, marks the VoIP-capable endpoint device as an active device to process incoming and outgoing call requests. This disclosure is not limited thereto.

Operational testings are to ensure the device operates correctly. This includes testing voice quality, call control functions, and caller ID. If the tests are successful, the device is marked as active and ready to handle inbound and outbound calls. This disclosure is not limited thereto.

In third stage, the agent router 1000 is responsible for continuous monitoring and maintenance of the device. For example, the agent router 1000 may monitor a status of the VoIP-capable endpoint device, wherein the status of the VoIP-capable endpoint device comprises at least one of: an online/offline status, a busy/idle status, or a battery level; and transmit a status change notification to the second router in response to detecting a change in the status of the VoIP-capable endpoint device. This disclosure is not limited thereto.

In third stage, the agent router 1000 constantly monitors the device's status and reports any changes to the controller router 2000. For example, the agent router 1000 may detect a malfunction in the VoIP-capable endpoint device; execute recovery operations; and transmit a malfunction alert to the second router in response to detecting that the recovery operations fail to resolve the malfunction. Thus, if a malfunction is detected, the agent router 1000 attempts to diagnose and perform automatic recovery actions.

Furthermore, when new firmware versions become available, the agent router 1000 is responsible for downloading and applying the firmware to the VoIP-capable endpoint device to improve performance and stability. For example, the agent router 1000 may receive firmware update information for the VoIP-capable endpoint device from the second router; obtain updated firmware from a network source over Internet; and install the updated firmware on the VoIP-capable endpoint device. This disclosure is not limited thereto.

Through these stages, the agent router 1000 ensures that the VoIP-capable endpoint device is successfully integrated into the VoIP communication VoIP-capable Mesh network and participates in the communication process. Additionally, by continuously monitoring device status, diagnosing faults, and performing maintenance, the agent router 1000 ensures the reliability and stability of the device, providing users with a high-quality voice communication experience.

After the VoIP-capable endpoint device is successfully integrated into the VoIP-capable mesh network, the device may then communicate via the agent router 1000. This process may be summarized as follows.

The agent router 1000 receives an action signal from the VoIP-capable endpoint device; and performs voice communication over the second router based on the action signal, wherein the action signal comprises at least one of: an indication of device off-hook, an indication of button activation input, or an indication of call initiation request.

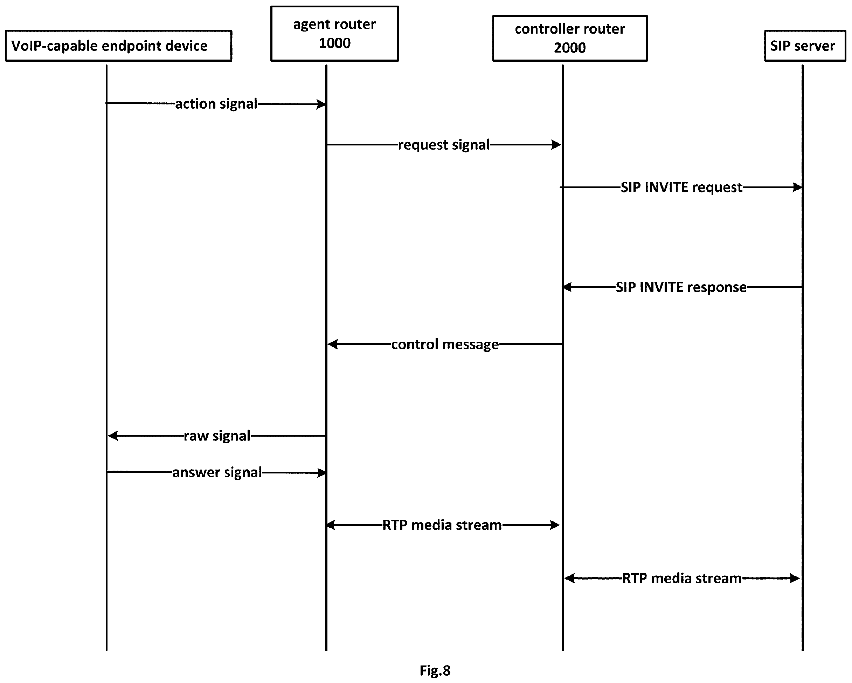

The following describes the outbound process of the VoIP-capable endpoint device with reference to Fig. 8.

When a VoIP-capable endpoint device (such as a DECT phone, analog phone, or voice app) initiates an outbound call request within a VoIP-capable Mesh network, the communication process proceeds as follows.

First, the agent router 1000 detects the action signals of the VoIP-capable endpoint device, such as off-hook, button press, or call request initiation. These action signals are captured through the agent router 1000's voice physical interface 402 (e.g., DECT chip, FXS port). In some embodiments, signals may also be captured via a software interface (e.g., voice app interface). The captured action signals are then transmitted to the voice control module 406 of the agent router 1000, which converts these action signals into a request signal that fit the internal voice protocol format for the VoIP-capable Mesh network and forwards them to the controller router 2000.

Upon receiving the request signal from the agent router 1000, the controller router 2000 parses the request signal to extract call information, such as the target phone number and call type. It then sends a SIP INVITE request through the WAN connection to a SIP server to establish the call connection. Upon receiving the request, the SIP server processes it through several steps, including retrieving routing information for the called number, authentication, and authorization, before sending a response message back to the controller router 2000, which could be a "200 OK" (call success) or an error code.

Based on the SIP server's response, the controller router 2000 generates a corresponding control message containing instructions on handling the call, such as ringing or displaying the caller ID. This message is encapsulated with the addressing information of the agent router 1000 and endpoint device, then relayed through the VoIP-capable Mesh network to the relevant agent router 1000. The agent router 1000, upon receiving the control message, decodes its contents to extract control instructions and converts them into a raw signal the VoIP-capable endpoint device may interpret, sending the raw signal to the voice endpoint device via the appropriate physical or software interface.

When the VoIP-capable endpoint device receives the raw signal, it executes the corresponding action, such as ringing or displaying the caller ID. If the user chooses to answer, the VoIP-capable endpoint device sends an answer signal to the agent router 1000. Once answered, the controller router 2000, acting as an RTP relay, establishes an RTP media stream A with the external calling device for real-time voice data transmission and sets up another RTP stream B with the agent router 1000, ensuring seamless voice data transmission to the VoIP-capable endpoint device.

Once the RTP streams are established, voice data is transmitted between the controller router 2000, agent router 1000, and VoIP-capable endpoint device, marking the start of the call. Throughout the call, the controller router 2000 and agent router 1000 continuously monitor network status and call quality. When the call ends, either through user hang-up or other causes of termination, the VoIP-capable Mesh network terminates the RTP streams via signaling and releases resources, with the controller router 2000 updating the state information of the VoIP-capable Mesh network accordingly.

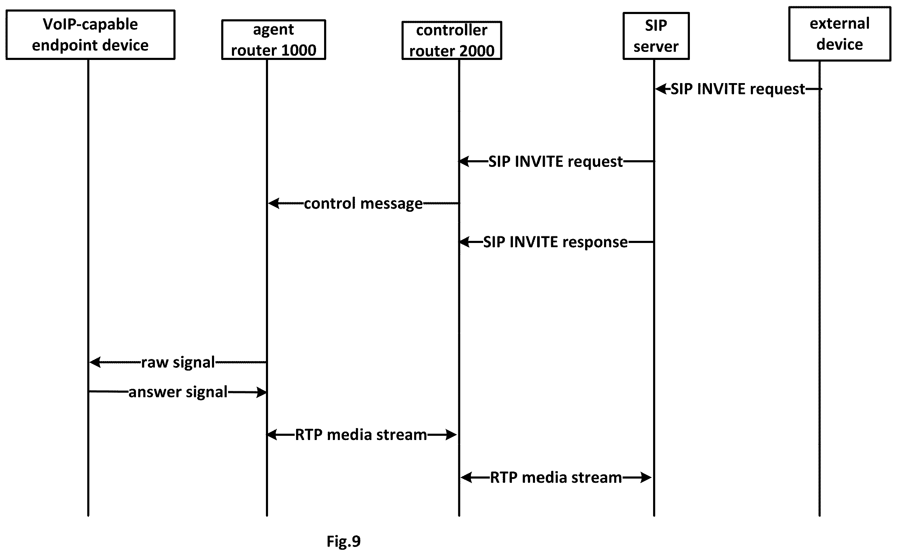

The following describes the inbound process of the VoIP-capable endpoint device with reference to Fig. 9.

When an (e.g., another VoIP phone, PSTN phone, or voice app) initiates an inbound call request to the VoIP-capable Mesh network, the inbound call process proceeds as follows.

The SIP server first receives a SIP INVITE request from the external device. This request includes the source address of the inbound call, the target address (i.e., the SIP URI of the VoIP-capable Mesh network), and potentially the caller's information. The SIP server then searches for routing information based on the target address and forwards the SIP INVITE request to the controller router 2000, a step involving DNS queries, SIP proxy servers, and other network elements.

Upon receiving the SIP INVITE request, the controller router 2000 parses the content to retrieve relevant information about the inbound call. Based on VoIP-capable Mesh network configuration and current status, it determines the appropriate agent router 1000 and VoIP-capable endpoint device to receive the inbound call. Once the target agent router 1000 and endpoint device are identified, the controller router 2000 generates the corresponding control messages, which may include instructions for ringing or caller ID display, directing the target device to take the necessary actions. The controller router 2000 then transmits these control messages to the specified agent router 1000 via the VoIP-capable Mesh network.

After receiving the control messages from the controller router 2000, the agent router 1000 parses the content and performs any required format conversion based on the type of endpoint device. The agent router 1000 then sends a raw signal with control instruction (such as ring signals or caller ID information) to the VoIP-capable endpoint device via the appropriate physical or software interface.

Upon receiving the control messages, the VoIP-capable endpoint device initiates ringing and displays the caller information. If the user decides to answer, the endpoint device sends an answer signal back to the agent router 1000.

Once the call is answered, the controller router 2000, acting as an RTP relay, establishes an RTP media stream with the external calling device to transmit real-time voice data. Simultaneously, the controller router 2000 establishes another RTP stream with the agent router 1000 to ensure seamless transmission of voice data to the user's VoIP-capable endpoint device.

With the RTP streams established, voice data flows between the controller router 2000, agent router 1000, and VoIP-capable endpoint device, marking the start of the call. Throughout the call, the controller router 2000 and agent router 1000 continuously monitor network conditions and call quality to maintain stability and clarity.

When the call ends, whether due to user hang-up or other interruptions, the VoIP-capable Mesh network terminates the RTP streams via the appropriate signaling mechanisms and releases associated resources. The SIP server may receive a BYE request to formally conclude the call, and the controller router 2000 updates the VoIP-capable Mesh network status information for future management and reporting.

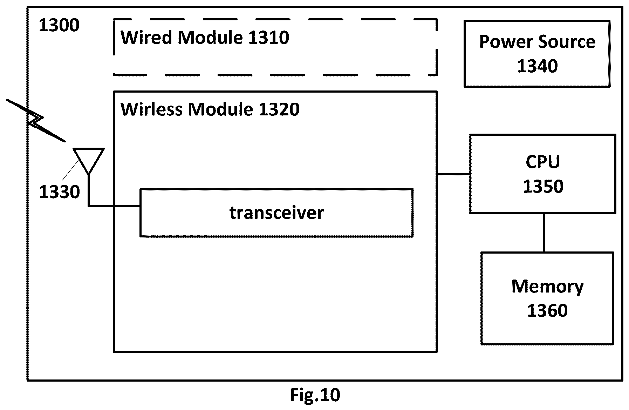

Further, Fig. 10 shows an example configuration of a communication device 1300, for example an agent router 1000 or a controller router 2000, according to an embodiment of the present disclosure. The communication device 1300 may include a Wired circuit 1310 (optional), a Wireless circuit 1320, at least one antenna 1330 (for the sake of simplicity, only one antenna is shown in Fig. 10), a power source 1340, a central processing unit (CPU) 1350 and at least one memory 1360. The transceiver may be used to establish a link and transmit/receive signal over a channel of the link via the antenna 1330. The Wireless circuit 1320 and the CPU 1350 may function together as a circuit of the communication device 1300 configured to perform methods as described in the present disclosure. It should be understood that the configuration of the communication device (e.g., router 30) shown in Fig. 10 is merely as example, but not a limitation. The configuration of the communication device in the present disclosure may comprise more or less components than those in Fig. 10.

According to another aspect of the present disclosure, there is provided a computer-readable storage medium for storing a computer-readable program, the program causing a computer to perform the method for wireless communication as described above.

It is noted that one or more blocks (or operations) described with reference to Figs. 1-10 may be combined with one or more blocks (or operations) described with reference to another of the figures.

Techniques for wireless communication may include additional aspects, such as any single aspect or any combination of aspects described below and/or in connection with one or more other processes described elsewhere herein.

In a first aspect, first router in a Mesh network is provided, wherein the first router operates in an agent-mode, the first router includes: a memory; and one or more processors operatively coupled to the memory, the one or more processors configured to: detect a connection of a VoIP-capable endpoint device to the first router through a voice physical interface, wherein the voice physical interface is a module that bridges the VoIP-capable endpoint device and the first router with at least one connection type; obtain device information of the VoIP-capable endpoint device; and based at least part on the device information of the VoIP-capable endpoint device, transmit the registration request to a second router operating in a controller-mode within the Mesh network.

In a second aspect, alone or in combination with any other aspect, wherein the one or more processors is further configured to: receive a registration response from the second router indicating that the VoIP-capable endpoint device has successfully registered to the Mesh network; receive configuration information of the VoIP-capable endpoint device from the second router; and configure the VoIP-capable endpoint device based on the configuration information received.

In a third aspect, alone or in combination with any other aspect, wherein the device information of the VoIP-capable endpoint device comprises at least one of: a device identifier, a device type, a device model, a device capability, interface connection information, a MAC address, an IP address, or a firmware version.

In a fourth aspect, alone or in combination with any other aspect, wherein the one or more processors is further configured to: perform operational testing of the VoIP-capable endpoint device, wherein the operational testing comprises testing voice quality and/or testing call control functionality; and in response to determining that a result of the operational testing meets predetermined criterion, mark the VoIP-capable endpoint device as an active device to process incoming and outgoing call requests.

In a fifth aspect, alone or in combination with any other aspect, the one or more processors is further configured to: monitor a status of the VoIP-capable endpoint device, wherein the status of the VoIP-capable endpoint device comprises at least one of: an online/offline status, a busy/idle status, or a battery level; and transmit a status change notification to the second router in response to detecting a change in the status of the VoIP-capable endpoint device.

In a sixth aspect, alone or in combination with any other aspect, wherein the one or more processors is further configured to: detect a malfunction in the VoIP-capable endpoint device; execute recovery operations; and transmit a malfunction alert to the second router in response to detecting that the recovery operations fail to resolve the malfunction.

In a seventh aspect, alone or in combination with any other aspect, wherein the one or more processors is further configured to: receive firmware update information for the VoIP-capable endpoint device from the second router; obtain updated firmware from a network source over Internet; and install the updated firmware on the VoIP-capable endpoint device.

In an eighth aspect, alone or in combination with any other aspect, wherein the one or more processors is further configured to: receive an action signal from the VoIP-capable endpoint device; and perform voice communication over the second router based on the action signal, wherein the action signal comprises at least one of: an indication of device off-hook, an indication of button activation input, or an indication of call initiation request.

In a ninth aspect, alone or in combination with any other aspect, a method performed by a first router in a Mesh network is provided, wherein the first router operates in an agent-mode. The method includes: detecting a connection of a VoIP-capable endpoint device to the first router through a voice physical interface; obtaining device information of the VoIP-capable endpoint device through the voice physical interface, generating a registration request comprising the device information of the VoIP-capable endpoint device; and transmitting the registration request to a second router operating in a controller-mode within the Mesh network.

In a tenth aspect, alone or in combination with any other aspect, a method for second router in a Mesh network is provided. wherein the second router operates in a controller-mode, the second router comprises: a memory configured to store configuration information for the Mesh network; and one or more processors operatively coupled to the memory, the one or more processors configured to: configure the first router according to other aspects based on the configuration information for the Mesh network.

In an eleventh aspect, alone or in combination with any other aspect, wherein the one or more processors is further configured to: in response to detecting a change in the configuration information for the Mesh network, determine a degree of the change in the configuration information; in response to the degree of the change in the configuration information for the Mesh network being less than or equal to a predetermined threshold, synchronize with the first router an update of a configuration item that has changed; in response to the degree of the change in the configuration information for the Mesh network exceeding the predetermined threshold, synchronize all configuration items with the first router.

In a twelfth aspect, alone or in combination with any other aspect, wherein the change in configuration information for the Mesh network comprises at least one of:a new VoIP-capable device being added, parameters of a VoIP-capable device being modified, or the SIP server address being updated.

In a thirteenth aspect, alone or in combination with any other aspect, wherein the one or more processors is further configured to: track a history of changes to configuration items within the configuration information for the Mesh network; and in response to detecting a conflict during the modification of a configuration item, revert the configuration item to a previous historical version.

In a fourteenth aspect, alone or in combination with any other aspect, the one or more processors is further configured to: transmit, to a display for rendering a user interface, information related to a function of at least one of device management, and/or configuration management.

In a fifteenth aspect, alone or in combination with any other aspect, the one or more processors is further configured to:receive information related to a function of editing and saving of configuration items for the Mesh network; update the configuration items of the Mesh network in memory.

In a sixteenth aspect, alone or in combination with any other aspect, wherein the one or more processors is further configured to: transmit information related to a function of logging an operational status of the Mesh network to a display for rendering a user interface, wherein logging the operational status of the Mesh network comprises logging at least one of: device status changes, call records, or error messages.

In a seventeenth aspect, alone or in combination with any other aspect, the one or more processors is further configured to: transmit information related to a function of access management to a display for rendering a user interface, wherein the function of access management includes assigning different permission levels to different users or user groups.

In a eighteenth aspect, alone or in combination with any other aspect, the one or more processors is further configured to: transmit information related to a function of remote device management to a display for rendering a user interface, wherein the function of remote device management includes at least one of: restarting devices, updating firmware, and performing diagnostic tests.

In a nineteenth aspect, alone or in combination with any other aspect, Mesh network is provied, which comprises a first routerand a second router.

Those of skill would appreciate that the logical blocks, circuits, and algorithm steps described here may be implemented as electronic hardware, computer software, or a combination. This interchangeability of hardware and software is shown by the illustrative components described functionally. Whether the functionality is implemented in hardware or software depends on the application and constraints. Experts may implement the functionality in various ways for each application, but those choices do not depart from the scope here. Experts also recognize the examples of components, methods, and interactions here are merely illustrative; the components, methods, or interactions may be combined or performed differently.

The illustrative logic, blocks, circuits, and processes described may be implemented as hardware, software, or a combination. This hardware and software interchangeability has been described generally in terms of functionality and illustrated in the components, blocks, circuits, and processes. Whether the functionality is implemented in hardware or software depends on the application and constraints.

In an embodiment of the present disclosure, the processor may be a logic computing device with data processing capabilities and/or program execution capabilities, such as a central processing unit (CPU), a field programmable logic array (FPGA), a single chip microcomputer (MCU), a digital signal processor (DSP), an application specific integrated circuit (ASIC), or the like. The memory may be, for example, a volatile memory and/or a non-volatile memory. The volatile memory may include, for example, a random access memory (RAM) and/or a cache (Cache) or the like. The non-volatile memory may include, for example, a read only memory (ROM), a mechanical hard disk (HDD), a solid state drive (SSD), a flash memory (Flash), a USB flash drive, a memory card (SD, CF, MicroSD, etc.), and the like.

It will be appreciated by a person skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, microcode, etc.) or combining software and hardware implementation that may all generally be referred to herein as a "data block", "circuit", "engine", "unit," "circuit," or "system". Furthermore, aspects of the present disclosure may take the form of a computer program product embodied in one or more computer-readable media having computer-readable program code embodied thereon.

Certain terminology has been used to describe embodiments of the present disclosure. For example, the terms "first/second embodiment", "one embodiment", "an embodiment", and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having the meaning that is consistent with their meaning in the context of the relevant art and will not be interpreted in an idealized or overly formal sense unless expressly so defined herein.

The above is illustration of the present disclosure and should not be construed as making limitation thereto. Although some exemplary embodiments of the present disclosure have been described, a person skilled in the art may easily understand that many modifications may be made to these exemplary embodiments without departing from the creative teaching and advantages of the present disclosure. Therefore, all such modifications are intended to be included within the scope of the present disclosure as defined by the appended claims. As will be appreciated, the above is to explain the present disclosure, it should not be constructed as limited to the specific embodiments disclosed, and modifications to the present disclosure and other embodiments are included in the scope of the attached claims. The present disclosure is defined by the claims and their equivalents.

## Claims

1. A first router in a Mesh network, wherein the first router operates in an agent-mode, wherein the first router comprises:
a memory; and
one or more processors operatively coupled to the memory, the one or more processors configured to:
detect a connection of a VoIP-capable endpoint device to the first router through a voice physical interface, wherein the voice physical interface is a module that bridges the VoIP-capable endpoint device and the first router with at least one connection type;
obtain device information of the VoIP-capable endpoint device; and
based at least part on the device information of the VoIP-capable endpoint device, transmit a registration request to a second router operating in a controller-mode within the mesh network.

2. The first router according to claim 1, wherein the one or more processors is further configured to:
receive a registration response from the second router indicating that the VoIP-capable endpoint device has successfully registered to the Mesh network;
receive configuration information of the VoIP-capable endpoint device from the second router; and
configure the VoIP-capable endpoint device based on the configuration information received.

3. The first router according to any one of claims 1-2, wherein the device information of the VoIP-capable endpoint device comprises at least one of:
a device identifier, a device type, a device model, a device capability, interface connection information, a MAC address, an IP address, or a firmware version.

4. The first router according to any one of claims 2-3, wherein the one or more processors is further configured to:
perform operational testing of the VoIP-capable endpoint device, wherein the operational testing comprises testing voice quality and/or testing call control functionality; and
in response to determining that a result of the operational testing meets predetermined criterion, mark the VoIP-capable endpoint device as an active device to process incoming and outgoing call requests.

5. The first router according to any one of claims 2-4, wherein the one or more processors is further configured to:
monitor a status of the VoIP-capable endpoint device, wherein the status of the VoIP-capable endpoint device comprises at least one of: an online/offline status, a busy/idle status, or a battery level; and
transmit a status change notification to the second router in response to detecting a change in the status of the VoIP-capable endpoint device.

6. The first router according to any one of claims 1-5, wherein the one or more processors is further configured to:
detect a malfunction in the VoIP-capable endpoint device;
execute recovery operations; and
transmit a malfunction alert to the second router in response to detecting that the recovery operations fail to resolve the malfunction.

7. The first router according to any one of claims 1-6, wherein the one or more processors is further configured to:
receive firmware update information for the VoIP-capable endpoint device from the second router;
obtain updated firmware from a network source over Internet; and
install the updated firmware on the VoIP-capable endpoint device.

8. The first router according to any one of claims 1-7, wherein the one or more processors is further configured to:
receive an action signal from the VoIP-capable endpoint device; and
perform voice communication over the second router based on the action signal,
wherein the action signal comprises at least one of:
an indication of device off-hook,
an indication of button activation input, or
an indication of call initiation request.

9. A second router in a Mesh network, wherein the second router operates in a controller-mode, the second router comprises:
a memory configured to store configuration information for the Mesh network; and
one or more processors operatively coupled to the memory, the one or more processors configured to:
configure the first router according to claim 1 based on the configuration information for the Mesh network.

10. The second router according to claim 9, wherein the one or more processors is further configured to:
in response to detecting a change in the configuration information for the Mesh network, determine a degree of the change in the configuration information;
in response to the degree of the change in the configuration information for the Mesh network being less than or equal to a predetermined threshold, synchronize with the first router an update of a configuration item that has changed; and
in response to the degree of the change in the configuration information for the Mesh network exceeding the predetermined threshold, synchronize all configuration items with the first router,
wherein the change in configuration information for the Mesh network comprises at least one of:a new VoIP-capable device being added, parameters of a VoIP-capable device being modified, or the SIP server address being updated.

11. The second router according to any one of claims 9-10, wherein the one or more processors is further configured to:
track a history of changes to configuration items within the configuration information for the Mesh network; and
in response to detecting a conflict during the modification of a configuration item, revert the configuration item to a previous historical version.

12. The second router according to any one of claims 9-11, wherein the one or more processors is further configured to:
transmit, to a display for rendering a user interface, information related to a function of at least one of device management, and/or configuration management;
receive information related to a function of editing and saving of configuration items for the Mesh network; and
update the configuration items of the Mesh network in memory.

13. The second router according to any one of claims 9-12, wherein the one or more processors is further configured to:
transmit information related to a function of logging an operational status of the Mesh network to a display for rendering a user interface, wherein logging the operational status of the Mesh network comprises logging at least one of: device status changes, call records, or error messages.

14. The second router according to any one of claims 9-13, wherein the one or more processors is further configured to:
transmit information related to a function of access management to a display for rendering a user interface, wherein the function of access management includes assigning different permission levels to different users or user groups, or
transmit information related to a function of remote device management to a display for rendering a user interface, wherein the function of remote device management includes at least one of: restarting devices, updating firmware, or performing diagnostic tests.

15. A Mesh network, comprising a first router according to any one of claims 1-8 and a second router which operates in a controller-mode and configures the first router.
